# EUROPÄISCHE PATENTSCHRIFT

(11) **EP 1 530 695 B1**
(45) Veröffentlichungstag und Bekanntmachung des Hinweises auf die Patenterteilung: **14.10.2009**
(21) Anmeldenummer: 03792113.7
(22) Anmeldetag: 30.06.2003
(51) Int. Cl.: F16K 1/226, F16J 15/06

(54) **VERFAHREN ZUM ABSCHLIESSEN EINES DROSSELKLAPPENSTUTZENS**
METHOD FOR SEALING A THROTTLE VALVE HOUSING
PROCEDE POUR OBTURER UNE TUBULURE DE PAPILLON DES GAZ

(30) Priorität: 19.08.2002 DE 10237864
(43) Veröffentlichungstag der Anmeldung: 18.05.2005
(73) Patentinhaber: Continental Automotive GmbH, 30165 Hannover (DE)
(72) Erfinder: HANNEWALD, Thomas, 64347 Griesheim (DE)
(86) Internationale Anmeldenummer: PCT/DE2003/002165
(87) Internationale Veröffentlichungsnummer: WO 2004/018912

(56) Entgegenhaltungen:
- WO-A-02/48586
- WO-A-99/67520
- DE-A- 19 508 355
- US-A- 5 098 064
- US-A- 6 065 483

## Beschreibung

Verfahren zum Abschließen von Drosselklappenstutzen sind bekannt. Das Abschließen erfolgt dabei mit Drosselklappen, die mittig im Drosselklappenstutzen auf einer Drosselklappenwelle angeordnet sind. Für eine möglichst niedrige Leerlaufdrehzahl muß die Drosselklappe dabei sehr dicht schließen können, so dass eine nachteilige Leckluft vermieden wird. Bei den heutigen mechanisch oder elektrisch angetriebenen Drosselklappenstutzen versucht man dies durch sehr enge Toleranzen der einzelnen Bauteile zu erreichen. Dies erfordert einen relativ hohen Fertigungsaufwand für den Drosselklappenstutzen und die Drosselklappe, die auf diese engen Toleranzen feinst gedreht werden muß. Dabei muß darauf geachtet werden, dass die Drosselklappe möglichst dicht an der Innenwand des Drosselklappenstutzens anliegt, die Innenwand aber nicht zu fest berührt, da es sonst zu einem Verklemmen der Drosselklappe kommen kann.

Der Erfindung liegt daher die Aufgabe zugrunde, ein Verfahren zum Abschließen eines Drosselklappenstutzens zu schaffen, bei dem auf eine aufwändige Nachbearbeitung des Drosselklappenstutzens oder der Drosselklappe verzichtet werden kann.

Die der Erfindung zugrundeliegende Aufgabe wird durch ein Verfahren zum Abschließen eines Drosselklappenstutzens gelöst, bei dem in einem ersten Schritt eine einteilige Drosselklappe an der Drosselklappenwelle befestigt wird, in einem zweiten Schritt mindestens ein elastisches Ausgleichselement auf die Drosselklappe aufgelegt wird, in einem dritten Schritt das elastische Ausgleichselement mit einem Spreizwerkzeug an die Innenwand des Drosselklappenstutzens angedrückt wird und in einem vierten Schritt das an die Innenwand des Drosselklappenstutzens angedrückte elastische Ausgleichselement mit der Drosselklappe verbunden wird. Die einteilige Drosselklappe kann beispielsweise aus einem kreisrunden Blech bestehen. Sie kann beispielsweise über eine Nietverbindung mit der Drosselklappenwelle befestigt werden. Im zweiten Schritt wird mindestens ein elastisches Ausgleichselement auf die Drosselklappe aufgelegt. Dabei können beispielsweise zwei elastische Ausgleichselemente eingesetzt werden, die teilkreisförmig gestaltet sind und mit ihren Enden an der Drosselklappenwelle anliegen. Im zweiten Schritt wird das mindestens eine elastische Ausgleichselement derart auf die Drosselklappe gelegt, dass zwischen ihm und der Innenwand des Drosselklappenstutzens ein Spalt von beispielsweise 0,1 bis 0,5 mm verbleibt. Der Durchmesser der Drosselklappe wird ebenfalls so gewählt, dass nach der Befestigung der Drosselklappe an der Drosselklappenwelle ein Spalt zwischen der Drosselklappe und der Innenwand des Drosselklappenstutzens von beispielsweise 0,1 bis 0,5 mm verbleibt. Als Spreizwerkzeug können handelsübliche Spreizwerkzeuge eingesetzt werden, die innen an dem Ausgleichselement eingreifen und dieses gegen die Innenwand des Drosselklappenstutzens drücken. In dieser Position erfolgt im vierten Schritt die Verbindung zwischen dem Ausgleichselement und der Drosselklappe. Die Verbindung kann dabei formschlüssig oder reibschlüssig erfolgen, je nach Wahl der Materialien für das elastische Ausgleichselement und die Drosselklappe. Es hat sich in überraschender Weise gezeigt, dass nach diesem Verfahren ein Abschließen des Drosselklappenstutzens in der Weise erfolgen kann, so dass es bei der Einstellung der Leerlaufdrehzahl nicht zu einer Bildung von Leckluft kommt. Dabei ist vorteilhaft, dass auf die Einstellung von geringen Toleranzbereichen der Drosselklappe und des Drosselklappenstutzens verzichtet werden kann. Die Drosselklappe muß somit nicht feinst gedreht werden, und der Drosselklappenstutzen muß ebenfalls an seiner Innenwand nicht aufwändig nachbearbeitet werden.

Eine bevorzugte Ausgestaltung der Erfindung besteht darin, dass die Drosselklappe über mindestens eine Schraubverbindung mit der Drosselklappenwelle verbunden wird. Dabei ist es vorteilhaft, zwei Schraubverbindungen vorzusehen. Die Drosselklappe kann dadurch auf relativ einfache Weise mit der Drosselklappenwelle verbunden werden.

Gemäß einer weiteren bevorzugten Ausgestaltung der Erfindung ist das elastische Ausgleichselement einteilig ausgeführt und weist zwei gegenüberliegende Durchbrüche auf, der zweite Schritt entfällt und das elastische Ausgleichselement wird vor dem ersten Schritt in einem Vorschritt mit den zwei gegenüberliegenden Durchbrüchen auf die Drosselklappenwelle aufgeschoben. Auf diese Weise wird die Positionierung des elastischen Ausgleichselements in vorteilhafter Weise vereinfacht. Die zwei gegenüberliegenden Durchbrüche können dabei so gestaltet sein, dass sie jeweils in die Lagerbohrungen für die Drosselklappenwelle hineinragen. Dadurch wird in vorteilhafter Weise eine Luftabdichtung zum Wellendurchbruch erreicht. Der Innendurchmesser der gegenüberliegenden Durchbrüche entspricht somit in etwa dem Außendurchmesser der Drosselklappenwelle, wobei natürlich sicherzustellen ist, dass das elastische Ausgleichselement noch auf die Drosselklappenwelle aufgeschoben werden kann.

Nach einer weiteren bevorzugten Ausgestaltung der Erfindung werden eine Drosselklappe aus Metall und ein elastisches Ausgleichselement aus einem Kunststoff eingesetzt. Dadurch läßt sich der Spreizvorgang besonders vorteilhaft durchführen.

Gemäß einer weiteren Ausgestaltung der Erfindung wird das an die Innenwand des Drosselklappenstutzens angedrückte elastische Ausgleichselement mit der Drosselklappe durch Kleben verbunden, wobei der Klebstoff im Vorschritt oder im zweiten Schritt vor dem Auflegen des mindestens einen elastischen Ausgleichselements auf die Drosselklappe oder auf das mindestens eine elastische Ausgleichselement aufgeben wird. Als Klebstoff kann dabei beispielsweise ein Zweikomponenten-Kleber auf Methacrylat-Basis (beispielsweise von Pattex: Stabilitexpress) eingesetzt werden. Die Befestigung des mindestens einen elastischen Ausgleichselements mit der Drosselklappe kann dadurch besonders einfach erfolgen, wobei auf eine Anordnung von weiteren Befestigungselementen, wie beispielsweise Nieten, verzichtet werden kann.

Nach einer weiteren bevorzugten Ausgestaltung der Erfindung wird eine Drosselklappe aus Kunststoff und ein elastisches Ausgleichselement aus Kunststoff eingesetzt. Eine Verbindung der Drosselklappe mit dem elastischen Ausgleichselement, beispielsweise durch Kleben, wird dadurch vorteilhaft erleichtert.

Nach einer weiteren Ausgestaltung der Erfindung wird als Kunststoffe Polyamid-6 eingesetzt. Polyamid-6 ist besonders widerstandsfähig, gerade unter den Bedingungen, wie sie im Drosselklappenstutzen während des Betriebs zu verzeichnen sind.

Eine weitere bevorzugte Ausgestaltung der Erfindung besteht darin, dass das Verbinden des elastischen Ausgleichselements mit der Drosselklappe durch Lasern erfolgt. Dadurch kann eine besonders stabile Verbindung zwischen der Drosselklappe und dem elastischen Ausgleichselement erreicht werden, die über längere Betriebszeiten stabil bleibt.

Gemäß einer weiteren bevorzugten Ausgestaltung der Erfindung wird eine Drosselklappe und mindestens ein elastisches Ausgleichselement aus Aluminium eingesetzt. Das elastische Ausgleichselement hat dabei die Form eines dünnen Metallbandes. Dabei ist vorteilhaft, dass ein Verbinden der Drosselklappe mit dem mindestens einen elastischen Ausgleichselement durch Punktschweißen realisiert werden kann.

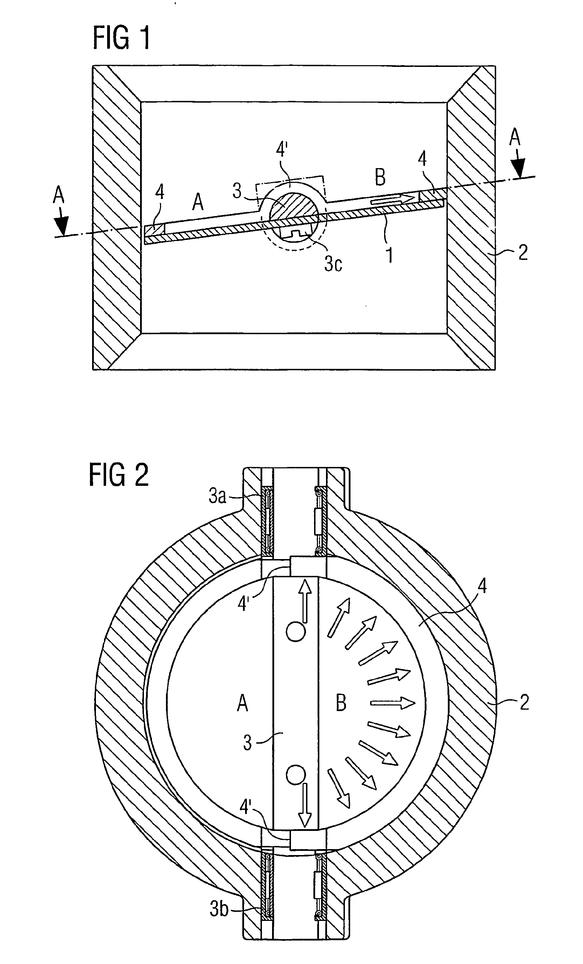

Die Erfindung wird nachfolgend anhand der Zeichnung (Fig. 1, Fig. 2) näher und beispielhaft erläutert.
Fig. 1 zeigt einen Drosselklappenstutzen im Querschnitt mit der Drosselklappe und einem elastischen Ausgleichselement.
Fig. 2 zeigt den Drosselklappenstutzen im Querschnitt gemäß Schnitt A-A in Fig. 1.

In Fig. 1 ist der Drosselklappenstutzen 2 im Querschnitt dargestellt. Die hälftige Darstellung A zeigt dabei den Zustand, in welchem das elastische Ausgleichselement 4 noch einen gewissen Abstand zum Drosselklappenstutzen 2 aufweist. In der hälftigen Darstellung B liegt das elastische Ausgleichselement 4 direkt an der Innenwand des Drosselklappenstutzens 2 an. Bei dem Verfahren zum Abschließen des Drosselklappenstutzens 2 wird in einem ersten Schritt eine einteilige Drosselklappe 1 an einer Drosselklappenwelle 3 befestigt. Dies erfolgt mit Hilfe einer Schraube 3c. In einem zweiten Schritt wird mindestens ein elastisches Ausgleichselement 4 auf die Drosselklappe 1 aufgelegt. Diesen Zustand zeigt die hälftige Darstellung A. Sofern die Verbindung zwischen dem elastischen Ausgleichselement und der Drosselklappe mit Hilfe eines Klebstoffes realisiert werden soll, ist vor dem Auflegen des elastischen Ausgleichselements 4 auf die Drosselklappe 1 dafür zu sorgen, dass entweder das elastische Ausgleichselement 4 oder die Drosselklappe 1 mit dem Klebstoff versehen werden. In einem dritten Schritt wird das elastische Ausgleichselement 4 mit einem Spreizwerkzeug (nicht dargestellt) in Pfeilrichtung an die Innenwand des Drosselklappenstutzens 2 gedrückt. Dies zeigt die hälftige Darstellung B. In einem vierten Schritt wird danach das an die Innenwand des Drosselklappenstutzens 2 angedrückte elastische Ausgleichselement 4 mit der Drosselklappe 1 verbunden. Soll diese Verbindung mit einem Klebstoff erfolgen, so kann es vorteilhaft sein, in den Drosselklappenstutzen 2 einen Stempel (nicht dargestellt) einzufahren und so das mindestens eine elastische Ausgleichselement 4 an die Drosselklappe 1 anzupressen. Je nach Wahl der Materialien kann es aber auch vorteilhaft sein, diese Verbindung durch Lasern oder formschlüssig, beispielsweise durch die Anordnung von Nieten, zu realisieren. Das dargestellte elastische Ausgleichselement 4 weist zwei gegenüberliegende Durchbrüche 4' auf, die halb-oder kreisrund gestaltet sind und deren Innendurchmesser nahezu dem Außendurchmesser der Drosselklappenwelle 3 entspricht. Wird ein solches elastisches Ausgleichselement 4 eingesetzt, so entfällt der zweite Schritt des Verfahrens und das elastische Ausgleichselement 4 wird vor dem ersten Schritt in einem Vorschritt mit den zwei gegenüberliegenden Durchbrüchen 4' auf die Drosselklappenwelle 3 aufgeschoben. Anschließend erfolgt der erste Schritt, bei dem die einteilige Drosselklappe 1 an der Drosselklappenwelle 3 befestigt wird.

In Fig. 2 ist der Drosselklappenstutzen 2 im Querschnitt gemäß Schnitt A-A in Fig. 1 dargestellt. Die Drosselklappenwelle 3 wird in zwei Lagern 3a, 3b gelagert. Das elastische Ausgleichselement 4 weist zwei gegenüberliegende Durchbrüche 4' auf, die die Drosselklappenwelle 3 umfassen. Sie können auch in die Lagerbohrungen der Lager 3a, 3b hineinragen, wodurch eine Luftabdichtung zum Wellendurchbruch in vorteilhafter Weise erzielt werden kann.

## Patentansprüche

1. Verfahren zum Abschließen eines Drosselklappenstutzens (2), bei dem in einem ersten Schritt eine einteilige Drosselklappe (1) an einer Drosselklappenwelle (3) befestigt wird, in einem zweiten Schritt mindestens ein elastisches Ausgleichselement (4) auf die Drosselklappe (1) aufgelegt wird, in einem dritten Schritt das elastische Ausgleichselement (4) mit einem Spreizwerkzeug an die Innenwand des Drosselklappenstutzens (2) angedrückt wird und in einem vierten Schritt das an die Innenwand des Drosselklappenstutzens (2) angedrückte elastische Ausgleichselement (4) mit der Drosselklappe (1) verbunden wird.

2. Verfahren nach Anspruch 1, bei dem die Drosselklappe (1) über mindestens eine Schraubverbindung mit der Drosselklappenwelle (3) verbunden wird.

3. Verfahren nach Anspruch 1 oder Anspruch 2, bei dem das elastische Ausgleichselement (4) einteilig ausgeführt ist und zwei gegenüberliegende Durchbrüche (4') aufweist und bei dem der zweite Schritt entfällt und das elastische Ausgleichselement (4) vor dem ersten Schritt in einem Vorschritt mit den zwei gegenüberliegenden Durchbrüchen (4') auf die Drosselklappenwelle (3) aufgeschoben wird.

4. Verfahren nach einem der Ansprüche 1 bis 3, bei dem die Drosselklappe (1) aus Metall und ein elastisches Ausgleichselement (4) aus einem Kunststoff eingesetzt werden.

5. Verfahren nach Anspruch 4, bei dem das an die Innenwand des Drosselklappenstutzens (2) angedrückte elastische Ausgleichselement (4) mit der Drosselklappe (1) durch Kleben verbunden wird, wobei der Klebstoff im Vorschritt oder im zweiten Schritt vor dem Auflegen des mindestens einen elastischen Ausgleichselements (4) auf die Drosselklappe (1) oder auf das mindestens eine elastische Ausgleichselement (4) aufgegeben wird.

6. Verfahren nach einem der Anspruche 1 bis 3, 5, bei dem eine Drosselklappe (1) aus Kunststoff und ein elastisches Ausgleichselement (4) aus Kunststoff eingesetzt werden.

7. Verfahren nach Anspruch 6, bei dem als Kunststoffe Polyamid-6 eingesetzt wird.

8. Verfahren nach einem der Ansprüche 1 bis 3, 6, 7, bei dem das Verbinden des elastischen Ausgleichselements (4) mit der Drosselklappe (1) durch Lasern erfolgt.

9. Verfahren nach einem der Ansprüche 1 bis 3 oder 8, bei dem eine Drosselklappe (1) und mindestens ein elastisches Ausgleichselement (4) aus Aluminium eingesetzt werden.

## Claims

1. Method for sealing a throttle valve housing (2), in which, in a first step, a one-part throttle valve (1) is fastened to a throttle valve shaft (3), in a second step at least one elastic compensating element (4) is laid on to the throttle valve (1), in a third step the elastic compensating element (4) is pressed against the inner wall of the throttle valve housing (2) by means of an expanding tool, and, in a fourth step, the elastic compensating element (4) pressed against the inner wall of the throttle valve housing (2) is connected to the throttle valve (1).

2. Method according to Claim 1, in which the throttle valve (1) is connected to the throttle valve shaft (3) via at least one screw connection.

3. Method according to Claim 1 or Claim 2, in which the elastic compensating element (4) is of one-part design and has two opposite perforations (4'), and in which the second step is omitted and the elastic compensating element (4) is pushed with the two opposite perforations (4') on to the throttle valve shaft (3) in a preliminary step before the first step.

4. Method according to one of Claims 1 to 3, in which the throttle valve (1) made from metal and an elastic compensating element (4) made from a plastic are used.

5. Method according to Claim 4, in which the elastic compensating element (4) pressed against the inner wall of the throttle valve housing (2) is connected to the throttle valve (1) by adhesive bonding, the adhesive being applied to the throttle valve (1) or to the at least one elastic compensating element (4) in a preliminary step or in the second step before the at least one elastic compensating element (4) is laid in place.

6. Method according to one of Claims 1 to 3 and 5, in which a throttle valve (1) made from plastic and an elastic compensating element (4) made from plastic are used.

7. Method according to Claim 6, in which polyamide-6 is used as plastics.

8. Method according to one of Claims 1 to 3, 6 and 7, in which the connection of the elastic compensating element (4) to the throttle valve (1) takes place by lasing.

9. Method according to one of Claims 1 to 3 or 8, in which a throttle valve (1) and at least one elastic compensating element (4) made from aluminium are used.

## Revendications

1. Procédé permettant de fermer hermétiquement une tubulure à papillon de régulation des gaz (2), au cours duquel, en une première phase, un papillon de régulation (1) en une seule pièce est fixé sur un arbre (3) de papillon de régulation des gaz, en une deuxième phase, au moins un élément élastique de compensation (4) est appliqué sur le papillon de régulation (1), en une troisième phase, l'élément élastique de compensation (4) est pressé à l'aide d'un outil extensible sur la paroi intérieure de la tubulure à papillon de régulation des gaz (2) et, en une quatrième phase, l'élément élastique de compensation (4) pressé contre la paroi intérieure de la tubulure à papillon de régulation des gaz (2) est lié au papillon de régulation (1) des gaz.

2. Procédé selon la revendication 1, au cours duquel le papillon de régulation (1) des gaz est lié à l'arbre (3) de papillon de régulation des gaz à l'aide de au moins une liaison vissée.

3. Procédé selon la revendication 1 ou la revendication 2, au cours duquel l'élément élastique de compensation (4) est exécuté en une seule pièce et comporte deux traversées (4') opposées l'une à l'autre et pour lequel la deuxième phase est supprimée et l'élément élastique de compensation (4) est, au cours d'une phase préliminaire précédant la première phase, glissé avec les deux traversées (4') opposées l'une à l'autre sur l'arbre (3) de papillon de régulation des gaz.

4. Procédé selon l'une des revendications 1 à 3, au cours duquel sont mis en oeuvre le papillon de régulation (1) des gaz en métal et un élément élastique de compensation (4) en matière plastique.

5. Procédé selon la revendication 4, au cours duquel l'élément élastique de compensation (4) pressé contre la paroi intérieure de la tubulure à papillon de régulation des gaz (2) est lié au papillon de régulation (1) des gaz par une liaison collée, la colle étant, au cours de la phase préliminaire ou au cours de la deuxième phase, avant l'application du au moins un élément élastique de compensation (4), mise en place sur le papillon de régulation des gaz (1) ou sur l'élément élastique de compensation (4).

6. Procédé selon l'une des revendications 1 à 3, 5, au cours duquel sont mis en oeuvre un papillon de régulation des gaz (1) en matière plastique et un élément élastique de compensation (4) en matière plastique.

7. Procédé selon la revendication 6, au cours duquel sont mis en oeuvre, en tant que matières plastiques, des polyamides 6.

8. Procédé selon l'une des revendications 1 à 3, 6, 7, au cours duquel la liaison de l'élément élastique de compensation (4) avec le papillon de régulation des gaz (1) est effectuée par laser.

9. Procédé selon l'une des revendications 1 à 3 ou 8, au cours duquel sont mis en oeuvre un papillon de régulation des gaz (1) et au moins un élément élastique de compensation (4) en aluminium.
